**Europäisches Patentamt**

**European Patent Office**

**Office européen des brevets**

(19)

(11) Veröffentlichungsnummer: **0 351 688**

**A1**

## (12) EUROPÄISCHE PATENTANMELDUNG

(21) Anmeldenummer: 89112610.4

(22) Anmeldetag: 10.07.89

(51) Int. Cl.⁴: **C02F 1/26 , C02F 1/52**

(30) Priorität: **18.07.88 DE 3824305**

(43) Veröffentlichungstag der Anmeldung:
**24.01.90 Patentblatt 90/04**

(84) Benannte Vertragsstaaten:
**ES**

(71) Anmelder: **Henkel Kommanditgesellschaft auf Aktien**
**Henkelstrasse 67**
**D-4000 Düsseldorf 13(DE)**

(72) Erfinder: **Guhl, Walter, Dr.**
**Wiedenhoferstrasse 27**
**D-5657 Haan(DE)**
Erfinder: **Fanenbruck, Walter**
**Am Falder 85**
**D-4000 Düsseldorf 13(DE)**
Erfinder: **Schenker, Gilbert, Dr.**
**Hermann-Hesse-Strasse 5**
**D-4006 Erkrath 2(DE)**
Erfinder: **Höfer, Rainer, Dr.**
**Klever Strasse 31**
**D-4000 Düsseldorf 30(DE)**

(54) **Verwendung von Ethersulfaten zur Entfernung von quartären Ammoniumverbindungen aus Abwässern.**

(57) Bei der Verwendung von Ethersulfaten der allgemeinen Formel (I)

$$R^1O\text{-}(C_nH_{2n}O)_x\text{-}CH_2\text{-}CHR^2\text{-}OSO_3M \qquad (I)$$

in der

$R^1$ einen geradkettigen Alkylrest mit 12 bis 22 Kohlenstoffatomen,

$R^2$ einen geradkettigen oder verzweigten Alkylrest mit 4 bis 20 Kohlenstoffatomen,

M Ammonium, Monoalkyl-, Dialkyl- oder Alkanolammonium mit jeweils 1 bis 4 Kohlenstoffatomen in den Alkyl- bzw. Alkanolgruppen oder ein Alkalimetall,

n eine Zahl von 2 und/oder 3 und

x eine Zahl im Bereich von 1 bis 20

bedeuten,

Zur Entfernung von quartären Ammoniumverbindungen, die an einem quartären Stickstoffatom mindestens eine Methylgruppe und mindestens eine langkettige, geradkettige, gegebenenfalls OH-substituierte Alkylgruppe aufweisen, aus Abwässern, werden gut filtrierbare Salze der Ethersulfate mit den quartären Ammoniumverbindungen erhalten.

EP 0 351 688 A1

**Verwendung von Ethersulfaten zur Entfernung von quartären Ammoniumverbindungen aus Abwässern**

Die Erfindung betrifft die Verwendung von Ethersulfaten der allgemeinen Formel I

$$R^1O\text{-}(C_nH_{2n}O)_x\text{-}CH_2\text{-}CHR^2\text{-}OSO_3M \qquad (I)$$

in der

$R^1$ einen geradkettigen Alkylrest mit 12 bis 22 Kohlenstoffatomen,

$R^2$ einen geradkettigen oder verzweigten Alkylrest mit 4 bis 20 Kohlenstoffatomen,

M Ammonium, Monoalkyl-, Dialkyl- oder Alkanolammonium mit jeweils 1 bis 4 Kohlenstoffatomen in den Alkyl- bzw. Alkanolgruppen oder ein Alkalimetall,

n eine Zahl von 2 und/oder 3 und

x eine Zahl im Bereich von 1 bis 20

bedeuten,

zur Entfernung von quartären Ammoniumverbindungen, die an einem quartären Stickstoffatom mindestens eine Methylgruppe und mindestens eine langkettige, geradkettige, gegebenenfalls OH-substituierte Alkylgruppe aufweisen, aus Abwässern.

Quartäre Ammoniumverbindungen der vorgenannten Art (Quats, QAV) gehören zu der Gruppe der kationischen oberflächenaktiven Mittel und werden vielfach als Detergenzien eingesetzt, vgl. J. Falbe (Hrgs.), Surfactants in Consumer Products, S. 106-114, Springer-Verlag, Berlin(1987). Sie verursachen schon in geringen Konzentrationen Störungen in biologischen Kläranlagen, da sie auf Substrate, z.B. Belebtschlammflocken aufziehen und den Bakterienstoffwechsel und damit die Abbauleistung vermindern).

Es ist bekannt, daß quartäre Ammoniumverbindungen mit linearen Alkylbenzolsulfonaten in Wasser unlösliche Neutralsalze bilden. Die Anwendung dieses Prinzips zur Entfernung von quartären Ammoniumverbindungen aus Abwässern scheitert jedoch daran, daß die genannten wasserunlöslichen Neutralsalze nicht oder nur schlecht filtrierbar sind, da sie in sehr feiner Form anfallen und die üblicherweise in Kläranlagen vorhandenen Filter schnell verstopfen.

Die vorliegende Erfindung beruht auf der Erkenntnis, daß sich mit Ethersulfaten der obigen allgemeinen Formel (I) bei der Umsetzung mit quartären Ammoniumverbindungen in Abwässern Niederschläge ergeben, die überraschend gut filtrierbar sind.

Die Ethersulfate der allgemeinen Formel (I) stellen sulfatierte Hydroxyalkyl-polyethylen- und Hydroxyalkyl polypropylenglykolether dar und sind Gegenstand der älteren, nicht vorveröffentlichten deutschen Patentanmeldung P 37 00 326.7, auf deren Inhalt später eingegangen wird.

Sie werden erhalten, indem z.B. aus der DE-A 33 45 349 bekannte Hydroxyalkylpolyethylen- bzw. Hydroxyalkylpolypropylenglykolether der allgemeinen Formel (II)

$$R^1O\text{-}(C_nH_{2n}O)_x\text{-}CH_2\text{-}CHR^2\text{-}OH \qquad (II)$$

beispielsweise mit Chlorsulfonsäure oder gasförmigem Schwefeltrioxid unter anschließender Neutralisation mit Natronlauge, Natriumcarbonat oder dergleichen umgesetzt werden.

Die Ether der allgemeinen Formel (II) lassen sich ihrerseits durch Ringöffnung epoxidierter alpha-Olefine der allgemeinen Formel

$R^2\text{-}EpO$ (EpO = Oxiranylrest)

mit Alkoholalkoxylaten der allgemeinen Formel

$R^1O\text{-}(C_nH_{2n}O)_x\text{-}H$

erhalten.

In den obigen allgemeinen Formeln bedeutet die Gruppe $R^1$ einen geradkettigen Alkylrest mit 12 bis 22 Kohlenstoffatomen wie n-Dodecyl, n-Tridecyl, n-Tetradecyl, n-Pentadecyl, n-Hexadecyl, n- Heptadecyl, n-Octadecyl, n-Nonadecyl, n-Eicosyl, n-Heneicosyl und n-Docosyl. Da die Gruppe $R^1O\text{-}(C_nH_{2n}O)_x$- von ethoxylierten und/oder propoxylierten Fettalkoholen abgeleitet sein kann, einschließlich Mischungen derselben, die üblicherweise in der Fettchemie eingesetzt werden und aus entsprechenden synthetischen und/oder insbesondere natürlichen Rohstoffen zugänglich sind, z.B. aus Fetten und Ölen pflanzlichen oder tierischen Ursprungs, können die Reste $R^1$ Fettalkylreste mit der angegebenen Kohlenstoffzahl sein.

Die Gruppe $R^2$ bedeutet einen geradkettigen, gegebenenfalls auch verzweigten Alkylrest mit 4 bis 20 Kohlenstoffatomen, wobei sich das Molekülfragment

$-O\text{-}CH_2\text{-}CHR^2\text{-}O-$

von einem Epoxid eines alpha-Olefins der entsprechenden Kohlenstoffzahl ableitet, insbesondere von 1,2-ungesättigtem Butylen, Pentylen, Hexylen, Heptylen, Octylen, Nonylen, Decylen, Undecylen, Dodecylen, Tridecylen, Tetradecylen, Pentadecylen, Hexadecylen, Heptadecylen, Octadecylen, Nonadecylen, Eicosen, Heneicosen und Docosen. Lineare Alkylreste $R^2$ bzw. lineare alpha-Olefine der vorstehend genannten Aufzählung sind bevorzugt.

In den obigen allgemeinen Formeln ist die Gruppe $-C_nH_{2n}O-$ eine Ethylenoxygruppe (n = 2), eine Propylenoxygruppe (n = 3) oder ein Gemisch von Ethylenoxy- und Propylenoxygruppen in random- oder block-Verteilung (n = 2 und 3); x bedeutet eine Zahl im Bereich von 1 bis 20, wobei Verbindungen der allgemeinen Formel (I) auch in Form von Gemischen von Verbindungen mit unterschiedlichen Ethoxylierungs- und/oder Propoxylierungsgraden vorliegen können.

Gemäß einer vorteilhaften Ausführungsform der Erfindung werden Ethersulfate der allgemeinen Formel (I) verwendet, in der

$R^1$ einen geradkettigen Alkylrest mit 12 bis 18 Kohlenstoffatomen,

$R^2$ einen geradkettigen Alkylrest mit 6 bis 16 Kohlenstoffatomen,

M Natrium oder Kalium.

n die Zahl 2 und

x eine Zahl im Bereich von 2 bis 10

bedeuten.

Typische Vertreter für die Gruppen $R^1$ und $R^2$ sind den obigen Aufstellungen zu entnehmen.

Typische Beispiele für die erfindungsgemäß zu entfernenden quartären Ammoniumverbindungen sind Hexadecyltrimethyl-, Tetradecyl/Octadecyltrimethyl-, Sojaalkyltrimethyl-, Cocosalkyldimethylbenzyl-, Cocosalkyl-2,4-dichlorbenzyldimethyl-, Stearyldimethylbenzyl-, Eicosyl/Docosyltrimethyl-, Dicocosalkyldimethyl-, Didecyldimethyl-, Distearyldimethyl-, quartäres Dialkyl $(C_{16}/C_{18})$-dimethyl- und Ditalgfettalkyldimethylammoniumchlorid.

Die Erfindung betrifft weiterhin ein Verfahren zur Entfernung von quartären Ammoniumverbindungen, die an einem quartären Stickstoffatom mindestens eine Methylgruppe und mindestens eine langkettige, geradkettige, gegebenenfalls OH-substituierte Alkylgruppe aufweisen, aus Abwässern durch Umsetzung derselben mit Aniontensiden und Abtrennen der unlöslichen Umsetzungsprodukte, das dadurch gekennzeichnet ist, daß man als Aniontenside Ethersulfate der allgemeinen Formel (I) $R^1O-(C_nH_{2n}O)_x-CH_2-CHR^2-OSO_3M$     (I)

in der

$R^1$ einen geradkettigen Alkylrest mit 12 bis 22 Kohlenstoffatomen,

$R^2$ einen geradkettigen oder verzweigten Alkylrest mit 4 bis 20 Kohlenstoffatomen,

M Ammonium, Monoalkyl-, Dialkyl- oder Alkanolammonium mit jeweils 1 bis 4 Kohlenstoffatomen in den Alkyl- bzw. Alkanolgruppen oder ein Alkalimetall,

n eine Zahl von 2 und/oder 3 und

x eine Zahl im Bereich von 1 bis 20,

bedeuten,

verwendet.

Bevorzugt ist auch hier die Verwendung von Ethersulfaten der allgemeinen Formel (I), in der

$R^1$ einen geradkettigen Alkylrest mit 12 bis 18 Kohlenstoffatomen,

$R^2$ einen geradkettigen Alkylrest mit 6 bis 16 Kohlenstoffatomen,

M Natrium oder Kalium,

n die Zahl 2 und

x eine Zahl im Bereich von 2 bis 10

bedeuten.

Typische Vertreter für die Gruppen $R^1$ und $R^2$ sind den obigen Aufstellungen zu entnehmen.

Gemäß einer bevorzugten Ausführungsform des Verfahrens der Erfindung setzt man dem Abwasser 1 bis 3 Mol der Aniontenside pro Mol der zu entfernenden quartären Ammoniumverbindungen zu, wobei die Umsetzungsprodukte der quartären Ammoniumverbindungen und Ethersulfate der allgemeinen Formel (I) abfiltriert werden.

Gemäß einer weiteren vorteilhaften Ausführungsform der Erfindung filtriert man die Umsetzungsprodukte von quartären Ammoniumverbindungen und Ethersulfaten der allgemeinen Formel (I) in Gegenwart von Aluminiumhydroxid ab. Zweckmäßigerweise erzeugt man dabei das Aluminiumhydroxid in dem zu reinigenden Abwasser in Gegenwart der genannten Umsetzungsprodukte, z.B. durch Zugabe von Aluminiumchlorid oder anderen wasserlöslichen Aluminiumverbindungen und geeigneten Basen, z.B. Natriumhydroxid oder Natriumcarbonat.

Als Filter für die Abtrennung von Umsetzungsprodukte von quartären Ammoniumverbindungen und Ethersulfaten der allgemeinen Formel (I) können sämtliche in der Abwassertechnik üblichen Filtermaterialien einschließlich Papierfiltern verwendet werden; bevorzugt erfolgt die Filtration an Sägespänen enthaltenden Filtern, gegebenenfalls in Mischung mit Polypropylenwatte.

Gemäß einer weiteren vorteilhaften Ausführungsform der Erfindung nimmt man die Entfernung der quartären Ammoniumverbindungen aus dem Abwasser vor der septischen Stufe biologischer Kläranlagen vor.

Die Erfindung wird im folgenden anhand von bevorzugten Ausführungsbeispielen näher erläutert.

Es wurden zunächst die in Tabelle 1 zusammengefaßten Ethersulfate der allgemeinen Formel (II) nach der folgenden allgemeinen Arbeitsvorschift hergestellt; als Ausgangsmatrialien dienten Umsetzungsprodukte aus 1 Mol 1,2-Epoxyalkan der Formel $R^2$-EpO und 1 Mol Anlagerungsprodukt von n Mol Ethylenoxid an Fettalkohole der Formel $R^1$-OH.

In einem Labor-Standreaktor, der mit 0,282 Mol des Ausgangsmaterials gefüllt und auf 35°C erwärmt war, wurden innerhalb von 15 min 23,7 g(0,296 Mol) gasförmiges (aus 36,4 g Oleum ausgetriebens) Schwefeltrioxid über ein Tauchrohr eingeleitet. Das Reaktionsgemisch wurde mit 24,8 g(0,311 Mol) einer 50 gew.-%igen wäßrigen Lösung von Natriumhydroxid neutralisiert und anschließend 30 min bei 95°C gerührt. Zuletzt wurde mit verdünnter Schwefelsäure auf einen pH-Wert von 7,5 eingestellt.

Die in der Tabelle 1 verwendeten Abkürzungen bedeuten:

SG = Sulfiergrad

TR = Trockenrückstand

AS = Aktivsubstanz (Trockenrückstand abzüglich anorganischer Salze und unsulfierter Anteile

US = unsulfierter Anteil

WAS = waschaktive Substanz (Anteil sulfierter Produkte)

Tabelle 1

| Hergestellte Ethersulfate der allgemeinen Formel II | | | | | | | | |
|---|---|---|---|---|---|---|---|---|
| $R^1O$-$(C_2H_4O)_x$-$CH_2$-$CHR^2$-$OSO_3Na$ (II) | | | | | | | | |
| Beispiel Nr. | $R^1$ | $R^2$ | x | SG | TR | AS | US | WAS |
| 1 | $C_{12/14}$ | $C_6$ | 4 | 92,3 | 66,0 | 64,0 | 4,3 | 62,7 |
| 2 | $C_{12/14}$ | $C_{10}$ | 4 | 89,1 | 42,1 | 40,2 | 4,1 | 40,0 |
| 3 | $C_{12/14}$ | $C_{16}$ | 4 | 91,8 | 22,4 | 20,9 | 1,6 | 21,3 |
| 4 | $C_{12/14}$ | $C_6$ | 9 | 94,8 | 55,8 | 54,6 | 2.6 | 55,0 |
| 5 | $C_{12/14}$ | $C_{14}$ | 9 | 93,3 | 44,0 | 43,1 | 2,5 | 43,3 |
| 6 | $C_{16/18}$ | $C_6$ | 2 | 86,8 | 49,8 | 48,3 | 5,6 | 45,4 |
| 7 | $C_{16/18}$ | $C_{10}$ | 2 | 85,9 | 31,7 | 30,5 | 4,0 | 29,4 |
| 8 | $C_{16/18}$ | $C_{14}$ | 2 | 90,4 | 29,2 | 28,6 | 2,8 | 30,7 |
| 9 | $C_{16/18}$ | $C_6$ | 5 | 93,7 | 63,3 | 62,2 | 3,5 | 61,8 |
| 10 | $C_{16/18}$ | $C_{10}$ | 5 | 93,0 | 48,8 | 47,8 | 2,9 | 45,0 |

Die obengenannten Ethersulfate wurden hinsichtlich ihrer Wirksamkeit bei der Abtrennung einer handelsüblichen, häufig eingesetzten quartären Ammoniumverbindung (Distearyldimethylammoniumchlorid), im folgenden mit QAV bezeichnet, getestet. Ein ebenfalls handelsübliches lineares Alkylbenzolsulfonat (LAS) wurden zur Vergleichszwecken als Aniontensid eingesetzt.

Die Fällungsversuche wurden mit einem Modellabwasser mit einem Gehalt von 40 mg QAV/1 durchgeführt. Als Kontrollösung diente eine Lösung von 4 mg QAV ohne Aniontensidzusatz. Die QAV-Fällung erfolgte durch Zugabe von 100 mg Tensid in 100 ml Wasser. Nach 10-minütigem leichtem Rühren wurden getrennte Lösungen von jeweils 1,5 g Natriumcarbonat und 0,5 g Aluminiumchlorid in 50 ml Wasser zugegeben. Der Niederschlag wurde über ein Sägespäne/Polypropylenwatte-Filter abfiltriert. Die Filtrate wurden biologisch und chemisch untersucht.

Für die biologische Untersuchung der Filtrate wurden Belebtschlammciliaten in das Filtrat gegeben; ihre Reaktion (bis zur Letalität) wurden nach 1, 12, 24 und 48 h beobachtet. Nach 1 h war nur in dem Kontrollansatz (mit 4 mg QAV/l) eine Reaktion der Tiere (Kontraktionen) zu beobachten; in dieser Probe waren die Zooide nach 12 h abgestorben. Bei allen Proben unter erfindungsgemäßer Verwendung von Aniontenside der allgemeinen Formel (I) lebten die Ciliaten noch nach 48 h. Im Sauerstoffzehrungstest nach Robra war nur bei dem Versuch mit LAS eine gewisse Hemmung der Sauerstoffzehrung im Vergleich zur Kontrolle mit der noch nicht wirksamen Konzentration von 4 mg zu beobachten.

Als Vertreter von Oberflächengewässern wurden Daphnien in die Filtrate eingesetzt. In der Kontrolle (mit 4 mg QAV/l) starben die Tiere innerhalb von 12 h. Bei dem Vergleichsansatz mit LAS und bei dem

4

Tensid des Beispiels 10 starben die Tiere innerhalb von 24 h. Bei sämtlichen übrigen Versuchen überlebten alle Tiere 48 h.

Die Ergebnisse der oben genannten Untersuchungen sind in Tabelle 2 zusammengefaßt. Es fällt auf, daß die erfindungsgemäße Verwendung von Ethertensiden zu einer wirksamen Reduktion des QAV-Gehalts führt; die Filtration der Niederschläge erfolgte problemlos. Bei einigen der erfindungsgemäß eingesetzten Aniontenside ergibt sich zwar im Filtrat ein größerer QAV-Gehalt als bei der Fällung mit LAS, bei letzterem fällt jedoch der hohe Restgehalt und die toxische Wirkung auf Ciliaten und Daphnien auf.

Tabelle 2

| Ergebnisse der Fällungsversuche und biologischen Prüfung | | | | | |
|---|---|---|---|---|---|
| Aniontensidgem. Beispiel Nr. | QAV[1] mg/ml | Aniontensid[2] mg/ml | Ciliatenüberleben (h) | Robra[3] mgO$_2$/l | Daphnienüberleben (h) |
| 1 | 0,5 | 7,6 | 48 | 0,4 | 48 |
| 2 | 0,5 | 4,1 | 48 | 0,4 | 48 |
| 3 | 0,3 | 2,8 | 48 | 0 | 48 |
| 4 | 1,6 | 9,1 | 48 | 0,6 | 48 |
| 5 | 0,7 | 4,1 | 48 | 0,6 | 48 |
| 6 | 2,5 | 4,1 | 48 | 0,5 | 48 |
| 7 | 2,0 | 4,7 | 48 | 0,9 | 48 |
| 8 | 1,9 | 2,2 | 48 | 0,8 | 48 |
| 9 | 2,9 | 4,4 | 48 | 1 | 48 |
| 10 | 2,6 | 4,5 | 48 | 0,05 | 24 |
| LAS | 1,1 | 26,4 | 12 | 0 | 12/24 |
| Kontrolle | 4,0 | -- | 12 | 0 | 12 |

1) QAV-Gehalt im Filtrat

2) Aniontensidgehalt im Filtrat

3) Sauerstoffzehrungstest nach Robra

## Ansprüche

1. Verwendung von Ethersulfaten der allgemeinen Formel (I)

$$R^1O\text{-}(C_nH_{2n}O)_x\text{-}CH_2\text{-}CHR^2\text{-}OSO_3M \qquad (I)$$

in der

$R^1$ einen geradkettigen Alkylrest mit 12 bis 22 Kohlenstoffatomen,

$R^2$ einen geradkettigen oder verzweigten Alkylrest mit 4 bis 20 Kohlenstoffatomen,

M Ammonium, Monoalkyl-, Dialkyl- oder Alkanolammonium mit jeweils 1 bis 4 Kohlenstoffatomen in den Alkyl- bzw. Alkanolgruppen oder ein Alkalimetall,

n eine Zahl von 2 und/oder 3 und

x eine Zahl im Bereich von 1 bis 20

bedeuten,

zur Entfernung von quartären Ammoniumverbindungen, die an einem quartären Stickstoffatom mindestens eine Methylgruppe und mindestens eine langkettige, geradkettige, gegebenenfalls OH-substituierte Alkylgruppe aufweisen, aus Abwässern.

2. Verwendung von Ethersulfaten der allgemeinen Formel (I) nach Anspruch 1, in der

$R^1$ einen geradkettigen Alkylrest mit 12 bis 18 Kohlenstoffatomen,

$R^2$ einen geradkettigen Alkylrest mit 6 bis 16 Kohlenstoffatomen,

M Natrium oder Kalium

n die Zahl 2 und

x eine Zahl im Bereich von 2 bis 10

bedeuten.

3. Verfahren zur Entfernung von quartären Ammoniumverbindungen, die an einem quartären Stickstoffatom mindestens eine Methylgruppe und mindestens eine langkettige, geradkettige, gegebenenfalls OH-substituierte Alkylgruppe aufweisen, aus Abwässern durch Umsetzung derselben mit Aniontensiden und Abtrennen der unlöslichen Umsetzungsprodukte, dadurch gekennzeichnet, daß mal als Aniontensid Ethersulfate der allgemeinen Formel (I)

$$R^1O\text{-}(C_nH_{2n}O)_x\text{-}CH_2\text{-}CHR^2\text{-}OSO_3M \qquad (I)$$

in der

$R^1$ einen geradkettigen Alkylrest mit 12 bis 22 Kohlenstoffatomen,

$R^2$ einen geradkettigen oder verzweigten Alkylrest mit 4 bis 20 Kohlenstoffatomen,

M Ammonium, Monoalkyl-, Dialkyl- oder Alkanolammonium mit jeweils 1 bis 4 Kohlenstoffatomen in den Alkyl- bzw. Alkanolgruppen oder ein Alkalimetall,

n eine Zahl von 2 und/oder 3 und

x eine Zahl im Bereich von 1 bis 20,

bedeuten,

verwendet.

4. Verfahren nach Anspruch 3, dadurch gekennzeichnet, daß man Ethersulfate der allgemeinen Formel (I) verwendet, in der

$R^1$ einen geradkettigen Alkylrest mit 12 bis 18 Kohlenstoffatomen,

$R^2$ einen geradkettigen Alkylrest mit 6 bis 16 Kohlenstoffatomen,

M Natrium oder Kalium,

n die Zahl 2 und

x eine Zahl im Bereich von 2 bis 10

bedeuten.

5. Verfahren nach Anspruch 3 oder 4, dadurch gekennzeichnet, daß man dem Abwasser 1 bis 3 Mol der Aniontenside pro Mol der zu entfernenden quartären Ammoniumverbindungen zusetzt.

6. Verfahren nach mindestens einem der Ansprüche 3 bis 5, dadurch gekennzeichnet, daß man die Umsetzungsprodukte von quartären Ammoniumverbindungen und Ethersulfaten der allgemeinen Formel (I) abfiltriert.

7. Verfahren nach mindestens einem der Ansprüche 3 bis 6, dadurch gekennzeichnet, daß man die Umsetzungsprodukte von quartären Ammoniumverbindungen und Ethersulfaten der allgemeinen Formel (I) in Gegenwart von Aluminiumhydroxid abfiltriert.

8. Verfahren nach mindestens einem der Ansprüche 3 bis 7, dadurch gekennzeichnet, daß man das Aluminiumhydroxid in Gegenwart der Umsetzungsprodukte aus quartären Ammoniumverbindungen und Ethersulfaten der allgemeinen Formel (I) in dem Abwasser erzeugt.

9. Verfahren nach mindestens einem der Ansprüche 3 bis 8, dadurch gekennzeichnet, daß man das Gemisch von Umsetzungsprodukten der quartären Ammoniumverbindungen und Ethersulfaten der allgemeinen Formel (I) sowie von Aluminiumhydroxid an Sägespäne enthaltenden Filtern filtriert.

10. Verfahren nach mindestens einem der Ansprüche 3 bis 8, dadurch gekennzeichnet, daß man die Entfernung der quartären Ammoniumverbindungen aus dem Abwasser vor der septischen Stufe biologischer Kläranlagen vornimmt.

| | Europäisches Patentamt | EUROPÄISCHER RECHERCHENBERICHT | Nummer der Anmeldung |
|---|---|---|---|
| | | | EP 89 11 2610 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 193 971 (COLGATE) <br> * Zusammenfassung; Seiten 7-8, Tabelle * <br> --- | 1 | C 02 F 1/26 <br> C 02 F 1/52 |
| A | FR-A-1 374 503 (GENERAL MILLS) <br> --- | | |
| A,D | J. FALBE: "Surfactants in consumer products", 1987, Seiten 106-114, Springer-Verlag, Berlin, DE <br> ----- | | |
| | | | **RECHERCHIERTE SACHGEBIETE (Int. Cl.5)** <br><br> C 02 F <br> C 22 B |

Der vorliegende Recherchenbericht wurde für alle Patentansprüche erstellt

| Recherchenort | Abschlußdatum der Recherche | Prüfer |
|---|---|---|
| DEN HAAG | 26-08-1989 | KASPERS H.M.C. |